# FASCICULE DE BREVET EUROPEEN

(11) **EP 3 180 528 B1**
(45) Date de publication et mention de la délivrance du brevet: **13.02.2019**
(21) Numéro de dépôt: 15767207.2
(22) Date de dépôt: 07.08.2015
(51) Int. Cl.: F16C 11/04

(54) **ASSEMBLAGE DE TYPE LIAISON PIVOT**
GELENKVERBINDUNGSANORDNUNG
PIVOT LINK ASSEMBLY

(30) Priorité: 13.08.2014 FR 1457799
(43) Date de publication de la demande: 21.06.2017
(73) Titulaire: Safran Landing Systems, 78140 Vélizy-Villacoublay (FR)
(72) Inventeur: RENAUD, Mathieu, 4000 Liège (BE); CHARRIER, Jean-Sébastien, F-31704 BLAGNAC Cedex (FR); GRENÊCHE, Rémi, F-31704 BLAGNAC Cedex (FR); MOUNIER, Anne, F-31704 BLAGNAC Cedex (FR); PILATO, Aurélie, Eléonore, F-78180 Montigny-le-bretonneux (FR)
(74) Mandataire: Urbain, Isabelle
(86) Numéro de dépôt international: PCT/FR2015/052185
(87) Numéro de publication internationale: WO 2016/024065

(56) Documents cités:
- EP-A1- 1 911 985
- WO-A1-90/15262
- US-A- 5 718 518
- US-A1- 2003 150 140

## Description

Le présent exposé concerne un assemblage de type liaison pivot, qui permet le pivotement relatif de deux parties de liaison, notamment destinées à être incorporées dans un train d'atterrissage d'un avion.

### ETAT DE LA TECHNIQUE ANTERIEURE

De façon connue, un assemblage de type liaison pivot peut comprendre un arbre ; et des première et deuxième parties de liaison dissociées l'une de l'autre et comprenant chacune un alésage recevant l'arbre pour permettre un pivotement relatif des première et deuxième parties de liaison, la première partie de liaison étant agencée axialement entre une première extrémité de l'arbre et un plan radial, tandis que la deuxième partie de liaison est agencée axialement entre ledit plan radial et l'autre extrémité de l'arbre. Des assemblages de type liaison pivot sont décrits dans EP 1 911 985 A1, WO 90/15262 et US 5,718,518.

Dans les applications aéronautiques, et tout particulièrement dans les trains d'atterrissage des avions, les charges soumises à ces assemblages peuvent être importantes, de sorte que l'on observe souvent un endommagement précoce des parties de liaison, notamment du bord des alésages respectifs de ces parties de liaison prévus pour recevoir l'arbre, nécessitant une maintenance souvent onéreuse.

Par ailleurs, dans le domaine de l'aéronautique, les masses des structures embarquées ont un impact direct sur les performances d'un aéronef, de sorte que les concepteurs de structures aéronautiques doivent veiller au moins à conserver un niveau de maîtrise acceptable dans les masses de ces structures, au mieux à essayer de les diminuer pour améliorer les performances de l'aéronef.

Il existe par conséquent un besoin pour la mise au point d'un assemblage de type liaison pivot muni de parties de liaison présentant des alésages dont les bords résistent mieux à ce phénomène d'endommagement, tout en maintenant la masse de l'assemblage à un niveau acceptable.

### PRESENTATION DE L'INVENTION

Des assemblages de type liaison pivot pour un train d'atterrissage suivant l'invention sont définis dans les revendications 1 et 2.

Les travaux d'étude et de modélisation menés par les inventeurs leur ont permis de mettre en évidence que le phénomène d'endommagement est essentiellement provoqué par une variation le long de l'arbre de l'intensité des efforts radiaux auxquels cet arbre est soumis en charge (cause à l'origine du phénomène d'endommagement), qui est susceptible d'atteindre un maximum local au voisinage du plan radial, et qui provoque une légère déformation en flexion de l'arbre à l'origine d'une augmentation sensible de pics locaux de contraintes engendrant des déformations locales des bords des alésages des parties de liaison (conséquences du phénomène d'endommagement).

L'idée des inventeurs, qui est mise en oeuvre dans l'assemblage selon l'aspect précité du présent exposé, est d'agir de manière combinée à la fois sur la cause et les conséquences de ce phénomène d'endommagement, de façon à ce que les moyens prévus pour agir sur la cause puissent être sous-dimensionnés et donc allégés grâce à la présence simultanée des moyens prévus pour agir sur les conséquences, et réciproquement. Il peut ainsi être efficacement lutté contre le phénomène d'endommagement, tout en obtenant un impact minimal sur la masse globale de l'assemblage.

En particulier, la cause à l'origine du phénomène d'endommagement peut être traitée par une variation d'une dimension radiale de la section intérieure de l'arbre, laquelle variation intervient au moins dans un premier plan axial et précisément entre la première extrémité de l'arbre et le plan radial au voisinage duquel l'arbre est susceptible d'être soumis en charge à un maximum local d'efforts radiaux, dans le sens d'une diminution de cette dimension radiale en se rapprochant de ce plan radial. Une telle variation de cette dimension radiale peut ainsi permettre un renforcement local de l'arbre s'opposant à sa déformation en flexion, tout en minimisant la masse de l'arbre au niveau de sa première extrémité, moins susceptible d'être soumise en charge à des efforts radiaux importants, pour compenser le renforcement local susmentionné. Les conséquences sont quant à elles traitées par l'insertion dans l'alésage de la première pièce de liaison d'une bague à épaisseur variable permettant un renforcement local du bord de cet alésage. L'action combinée de cette bague et de la variation de la dimension radiale de la section intérieure de l'arbre permet de diminuer sensiblement le phénomène d'endommagement, tout en permettant, par le bénéfice de leurs présences mutuelles, une minimisation du dimensionnement de l'une et de l'autre, qui permet de préserver une masse globale acceptable pour l'assemblage.

Dans le présent exposé, on entend désigner par le terme « axial », l'axe qui est défini par l'arbre et autour duquel les première et deuxième parties de liaison peuvent pivoter l'une par rapport à l'autre. Ainsi, on entend désigner par l'expression «direction axiale », une direction parallèle à cet axe, tandis que l'adverbe « axialement » signifie, dans le présent exposé, « selon une direction axiale » (par exemple, la première extrémité et l'autre extrémité de l'arbre sont espacées axialement, c'est-à-dire espacées selon la direction axiale). De même, dans le présent exposé, on entend désigner par l'expression « plan axial », un plan contenant l'axe de l'arbre.

Par ailleurs, dans le présent exposé, on entend désigner par le terme « radial », une direction perpendiculaire et sécante à l'axe de l'arbre. Ainsi, l'adverbe « radialement » signifie « perpendiculairement et de façon sécante » à cet axe, c'est-à-dire « selon une direction radiale ». En outre, dans le présent exposé, l'expression « plan radial » désigne un plan perpendiculaire à cet axe. Par ailleurs, les expressions « dimension radiale » et « épaisseur radiale » désignent respectivement une dimension et une épaisseur qui sont projetées sur une droite orthogonale et sécante à cet axe.

Dans certains modes de réalisation, les première et deuxième parties de liaison peuvent être pivotées à 180° l'une par rapport à l'autre et définir dans cette configuration le premier plan axial. Les efforts radiaux transmis à l'arbre sont en effet susceptibles d'être importants dans cette configuration lorsque l'assemblage est chargé.

Dans certains modes de réalisation, la dimension radiale variable peut diminuer linéairement en se rapprochant axialement du plan radial, ce qui est une solution simple techniquement pour obtenir une variation de cette dimension.

Dans certains modes de réalisation, la section intérieure de l'arbre peut présenter, dans ledit au moins un premier plan axial, sur un deuxième tronçon de l'arbre axialement adjacent au premier tronçon, une dimension radiale constante. En particulier, dans au moins ledit premier plan axial, la dimension radiale de la section intérieure peut présenter une valeur minimale axialement atteinte en un point particulier du premier tronçon, à distance du plan radial, et conservée tout le long du deuxième tronçon, ce qui peut permettre de renforcer encore davantage l'arbre au niveau de sa zone la plus sollicitée en flexion.

Dans certains modes de réalisation, la section intérieure de l'arbre peut être circulaire. On comprend que la caractéristique de la dimension radiale de la section intérieure, qui est vérifiée dans le premier plan axial, est également vérifiée dans n'importe quel autre plan axial. L'arbre peut ainsi être renforcé de façon uniforme selon sa direction circonférentielle et son espace intérieur peut en outre être obtenu facilement par une opération classique d'usinage, notamment lorsque l'arbre est réalisé en métal, ce qui n'est néanmoins pas une obligation dans le cadre du présent exposé.

Suivant une première alternative de l'invention, l'épaisseur radiale de la bague augmente en se rapprochant axialement du plan radial, au moins dans le premier plan axial. Cette forme de bague peut permettre de minimiser sa masse, grâce à l'amincissement de son épaisseur en s'éloignant axialement du plan radial, tout en renforçant localement la portion du bord de l'alésage la plus susceptible d'être soumise aux plus fortes contraintes lorsque l'arbre subit une déformation en flexion.

Dans certains modes de réalisation, la bague peut présenter, dans un plan de coupe parallèle au plan radial, une circonférence interne circulaire, ce qui est une solution simple techniquement pour faciliter le montage de la bague sur l'arbre.

Dans certains modes de réalisation, la bague peut présenter, dans ledit plan de coupe, une circonférence externe circulaire, dont le diamètre diminue en passant dudit plan de coupe à un autre plan de coupe plus éloigné du plan radial et parallèle au plan radial.

Dans certains modes de réalisation, la bague peut présenter une symétrie de révolution, ce qui est une solution simple techniquement pour réaliser cette bague, par exemple par une opération classique d'usinage, notamment lorsque la bague est réalisée en métal, ce qui n'est néanmoins pas une obligation dans le cadre du présent exposé.

Suivant une deuxième alternative de l'invention, l'épaisseur radiale de la bague est plus importante dans le premier plan axial que dans un deuxième plan axial orthogonal au premier plan axial, ce qui peut permettre d'alléger la masse de la bague tout en renforçant le bord de l'alésage dans le plan axial où les contraintes appliquées sur ce dernier sont susceptibles d'être les plus importantes.

Dans certains modes de réalisation, la bague peut présenter, dans un plan de coupe parallèle au plan radial, une circonférence interne circulaire et une circonférence externe non circulaire, ce qui est une solution simple techniquement pour réaliser la variation d'épaisseur radiale.

Dans certains modes de réalisation, la circonférence externe peut être elliptique et présenter un plus grand axe dans le premier plan axial et un plus petit axe dans le deuxième plan axial.

Dans certains modes de réalisation, la première partie de liaison et/ou la deuxième partie de liaison peut incorporer un matériau composite, par exemple un matériau en carbone/époxy.

Dans certains modes de réalisation, la première partie de liaison peut incorporer un matériau composite, tandis que la deuxième partie de liaison peut être constituée d'un matériau métallique.

Dans certains modes de réalisation, la deuxième partie de liaison peut incorporer un matériau composite, tandis que la première partie de liaison peut être constituée d'un matériau métallique.

Le recours aux matériaux composites tend à se démocratiser dans le domaine aéronautique, de par leur faible densité et leurs bonnes tenues mécaniques et en fatigue. Ainsi, l'emploi de matériaux composites a pour avantage de rendre possible une réduction de la masse d'une pièce donnée par rapport à d'autres matériaux plus classiques, tels les métaux. Toutefois, les matériaux composites présentent l'inconvénient d'être plus sensibles aux phénomènes d'endommagement, de par leurs caractéristiques intrinsèques qui font connaître aux matériaux composites des modes de rupture qui leurs sont propres, tel que le délaminage (décohésion entre plis adjacents). Or, l'assemblage selon l'aspect précité du présent exposé a précisément été conçu pour mieux résister au phénomène d'endommagement. Dès lors, l'incorporation d'au moins un matériau composite dans cet assemblage est pertinente, dans la mesure où elle permet d'obtenir l'avantage du gain de masse procuré par ce matériau, tout en minimisant son inconvénient.

Dans certains modes de réalisation, l'assemblage peut comprendre une chape incorporant la première partie de liaison et une troisième partie de liaison espacée axialement de la première partie de liaison ; et une contre-pièce qui incorpore la deuxième partie de liaison et qui est interposée axialement entre les première et troisième parties de liaison de la chape. Un tel agencement de l'assemblage peut permettre de résister à de plus grandes charges, dans la mesure où ces dernières peuvent être réparties sur les deux parties de liaison de la chape.

Dans certains modes de réalisation, les première et troisième parties de liaison peuvent être symétriques entre elles par rapport à un plan de symétrie parallèle au plan radial, et la section intérieure de l'arbre peut être symétrique par rapport audit plan de symétrie.

Les caractéristiques et avantages précités, ainsi que d'autres, apparaîtront mieux à la lecture de la description détaillée qui suit, d'exemples de réalisation qui sont dépourvus de tout caractère limitatif et qui sont simplement proposés à titre illustratif. Cette description détaillée fait référence aux dessins annexés.

### BREVE DESCRIPTION DES DESSINS

Les dessins annexés sont schématiques et ne sont pas à l'échelle, ils visent avant tout à illustrer les principes mentionnés dans le présent exposé. Sur ces dessins annexés :
- la figure 1 est une vue en perspective d'un assemblage de type liaison pivot selon un premier exemple de réalisation conforme au présent exposé ;
- la figure 2 montre une vue en éclaté de cet assemblage ;
- la figure 3 représente une vue en coupe de cet assemblage selon le plan axial Q illustré sur la figure 1 ;
- la figure 4 est une vue en perspective et en coupe partielle d'une bague de cette assemblage ;
- la figure 5 montre une vue en perspective d'une bague d'un assemblage selon un deuxième exemple de réalisation conforme au présent exposé ;
- la figure 6 représente une vue analogue à la figure 3 de l'assemblage selon ce deuxième exemple.

### DESCRIPTION DETAILLEE D'EXEMPLES DE REALISATION

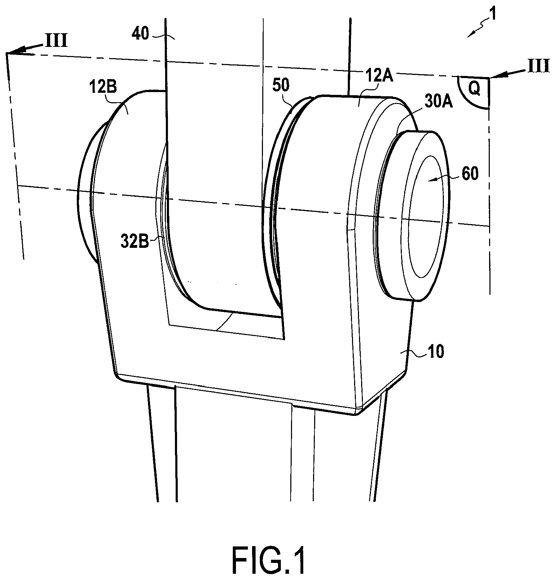

Les figures 1 à 3 représentent de façon schématique un premier exemple de réalisation d'un assemblage 1 de type liaison pivot conforme au présent exposé.

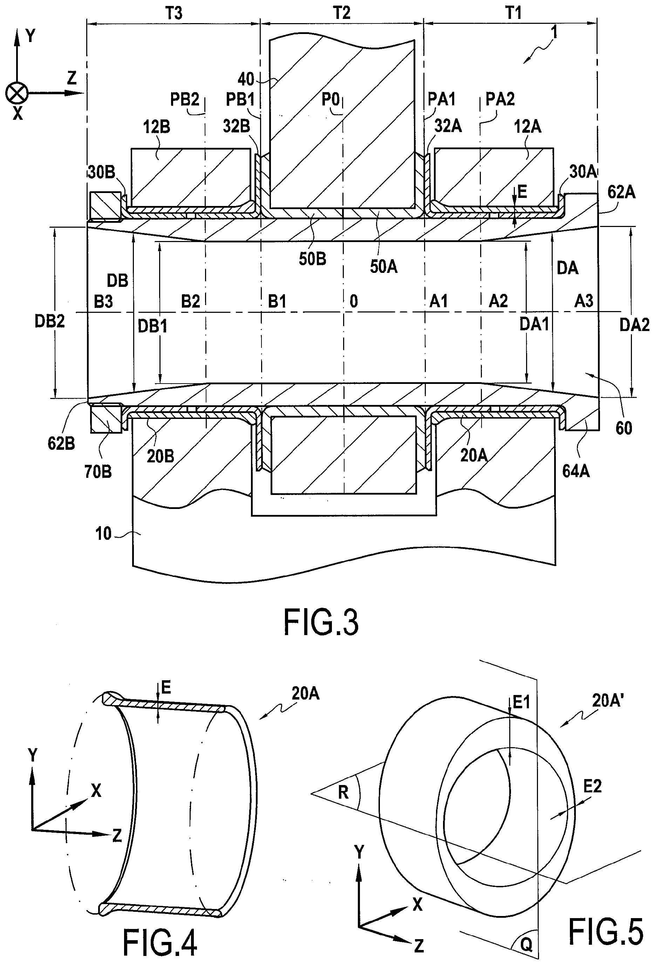

Dans cet exemple (voir en particulier la figure 3), l'assemblage 1 comprend un arbre 60 ; et des première et deuxième parties de liaison 12A, 40 dissociées l'une de l'autre et comprenant chacune un alésage recevant l'arbre 60 pour permettre un pivotement relatif des première et deuxième parties de liaison 12A, 40, la première partie de liaison 12A étant agencée axialement entre une première extrémité 62A de l'arbre 60 et un premier plan radial PA1 (parallèle aux directions X et Y visibles notamment sur la figure 3), tandis que la deuxième partie de liaison 40 est agencée axialement entre ledit premier plan radial PA1 et la deuxième extrémité 62B de l'arbre 60. L'arbre 60 est creux et comporte une section intérieure qui présente, dans au moins un premier plan axial Q (illustré sur la figure 1 et parallèle aux directions Y et Z dans cet exemple), sur un premier tronçon T1 de l'arbre 60 délimité axialement entre la première extrémité 62A et le premier plan radial PA1, une dimension radiale variable DA qui diminue en se rapprochant axialement du premier plan radial PA1. L'assemblage 1 comprend une première bague 20A (bien visible sur la figure 4) interposée radialement entre l'arbre 60 et l'alésage de la première partie de liaison 12A et présentant une épaisseur radiale variable E.

Dans cet exemple, l'arbre 60 définit un axe (bien visible sur la figure 1 et parallèle à la direction Z représentée sur la figure 3), autour duquel les première et deuxième parties de liaison 12A, 40 peuvent pivoter l'une par rapport à l'autre, ce qui permet de réaliser la fonctionnalité souhaitée de liaison pivot.

Dans cet exemple, les première et deuxième parties de liaison 12A, 40 peuvent être pivotées à 180° l'une par rapport à l'autre pour adopter la configuration représentée sur la figure 3 et définissent dans cette configuration le premier plan axial Q.

Dans cet exemple, la direction axiale est parallèle à la direction Z, tandis qu'une direction radiale est perpendiculaire à cette direction Z. Une telle direction radiale coupe l'axe de l'arbre 60.

Dans cet exemple, tout plan qualifié « d'axial » contient l'axe de l'arbre 60 et est donc parallèle à la direction Z. En particulier, dans cet exemple, le premier plan axial Q est parallèle aux directions Y et Z. Dès lors, une direction radiale appartenant à ce premier plan axial Q est nécessairement parallèle à la direction Y.

Dans cet exemple, tout plan qualifié de « radial » est perpendiculaire à la direction Z et est ainsi parallèle aux directions X et Y.

Dans cet exemple, l'assemblage 1 est du type « chape/axe ». Il comporte une chape 10 incorporant la première partie de liaison 12A et une troisième partie de liaison 12B espacée axialement de la première partie de liaison 12A ; et une contre-pièce qui incorpore la deuxième partie de liaison 40 et qui est interposée axialement entre les première et troisième parties de liaison 12A, 12B de la chape 10.

Dans cet exemple, la chape 10 et la contre-pièce pivotent l'une par rapport à l'autre autour de l'axe. Lors de ce pivotement, les première et troisième parties de liaison 12A, 12B sont solidaires en déplacement. Elles forment un ensemble unitaire dissocié de la deuxième partie de liaison 40, cet ensemble et cette deuxième partie de liaison 40 pouvant pivoter l'un par rapport à l'autre autour de l'axe défini par l'arbre 60.

Dans cet exemple, la deuxième partie de liaison 40 est agencée axialement entre le premier plan radial PA1 et un deuxième plan radial PB1, tandis que la troisième partie de liaison 12B est agencée axialement entre le deuxième plan radial PB1 et la deuxième extrémité 62B de l'arbre 60.

Dans cet exemple, la section intérieure de l'arbre 60 présente, dans au moins le premier plan axial Q, sur un deuxième tronçon T2 de l'arbre 60 axialement adjacent au premier tronçon T1 et délimité axialement entre le premier plan radial PA1 et le deuxième plan radial PB1, une dimension radiale constante DA1, DB1.

Dans cet exemple, la section intérieure de l'arbre 60 présente, dans au moins le premier plan axial Q, sur un troisième tronçon T3 de l'arbre 60 axialement adjacent au deuxième tronçon T2 et délimité axialement entre le deuxième plan radial PB1 et la deuxième extrémité 62B de l'arbre 60, une dimension radiale variable DB qui diminue en se rapprochant axialement du deuxième plan radial PB1.

Dans cet exemple, l'assemblage 1 comprend une deuxième bague 20B interposée radialement entre l'arbre 60 et l'alésage de la troisième partie de liaison 12B et présentant une épaisseur radiale variable.

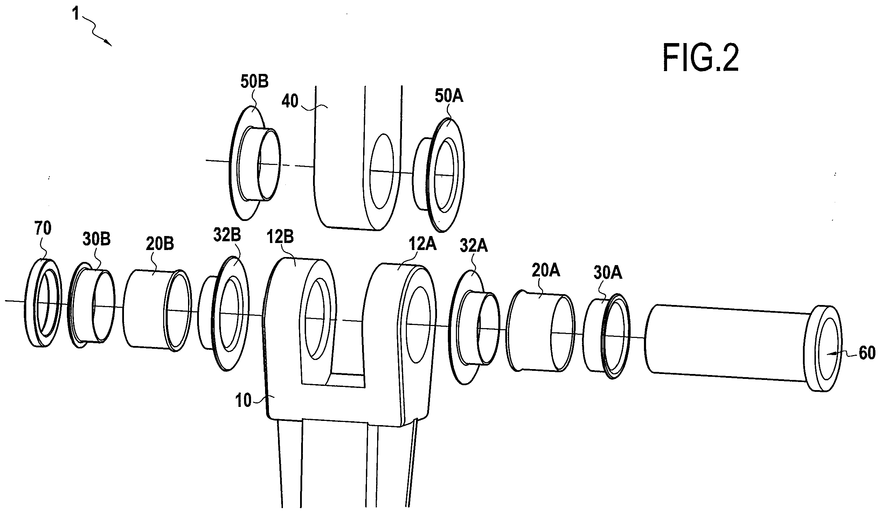

Dans cet exemple, la section intérieure de l'arbre 60 est circulaire, comme cela est bien visible sur les figures 1 et 2. Ainsi, sur chacun des premier, deuxième et troisième tronçons T1, T2 et T3, la caractéristique de la dimension radiale de cette section intérieure, qui est vérifiée dans le premier plan axial Q, est également vérifiée dans n'importe quel autre plan axial, en particulier un deuxième plan axial orthogonal au premier plan axial Q (ce deuxième plan axial est parallèle aux directions X et Z sur la figure 3). Dans ce cas, la dimension radiale de la section intérieure correspond à son diamètre, comme cela est représenté sur la figure 3.

Dans cet exemple, sur le premier tronçon T1, la dimension radiale variable DA diminue linéairement en se rapprochant axialement du premier plan radial PA1.

Dans cet exemple, sur le troisième tronçon T3, la dimension radiale variable DB diminue linéairement en se rapprochant axialement du deuxième plan radial PB1.

Dans cet exemple, sur le premier tronçon T1, la dimension radiale DA de la section intérieure présente une plus grande valeur DA2 dans le plan radial défini par la première extrémité 62A, dont l'intersection avec l'axe de l'arbre 60 est le point A3. Ensuite, toujours sur le premier tronçon T1, la dimension radiale DA de la section intérieure diminue en s'éloignant axialement de cette première extrémité 62A, jusqu'à atteindre une plus petite valeur DA1 dans un plan radial PA2 coupant l'axe de l'arbre 60 en un point A2, qui est à distance du point A3 et d'un point A1 correspondant à l'intersection du premier plan radial PA1 avec l'axe de l'arbre 60. Ainsi, le plan radial PA2 est parallèle au premier plan radial PA1, axialement en retrait de ce dernier du côté de la première extrémité 62A de l'arbre 60. Ensuite, toujours sur le premier tronçon T1, la dimension radiale DA est constante et égale à sa plus petite valeur DA1 sur la portion restante du premier tronçon T1 comprise entre le plan radial PA2 et le premier plan radial PA1.

Dans cet exemple, sur le troisième tronçon T3, la dimension radiale DB de la section intérieure présente une plus grande valeur DB2 dans le plan radial défini par la deuxième extrémité 62B, dont l'intersection avec l'axe de l'arbre 60 est le point B3. Ensuite, toujours sur le troisième tronçon T3, la dimension radiale DB de la section intérieure diminue en s'éloignant axialement de cette deuxième extrémité 62B, jusqu'à atteindre une plus petite valeur DB1 dans un plan radial PB2 coupant l'axe de l'arbre 60 en un point B2, qui est à distance du point B3 et d'un point B1 correspondant à l'intersection du deuxième plan radial PB1 avec l'axe de l'arbre 60. Ainsi, le plan radial PB2 est parallèle au deuxième plan radial PB1, axialement en retrait de ce dernier du côté de la deuxième extrémité 62B de l'arbre 60. Ensuite, toujours sur le troisième tronçon T3, la dimension radiale DB est constante et égale à sa plus petite valeur DB1 sur la portion restante du troisième tronçon T3 comprise entre le plan radial PB2 et le deuxième plan radial PB1.

Dans cet exemple, la valeur DA1 est égale à la valeur DB1. De même, dans cet exemple, la valeur DA2 est égale à la valeur DB2.

Dans cet exemple, sur le deuxième tronçon T2, la dimension radiale de la section intérieure est constante. En particulier, elle est égale à la valeur DA1, elle-même égale à la valeur DB1 dans cet exemple.

Dans cet exemple, compte-tenu du fait que la section intérieure est circulaire, la surface interne de l'arbre 60 présente une symétrie de révolution par rapport à l'axe de l'arbre 60.

Dans cet exemple, cette surface interne comporte une première portion tronconique dont l'axe est confondu avec celui de l'arbre 60, et dont les grande et petite bases sont respectivement tournées vers la première extrémité 62A de l'arbre 60 et le premier plan radial PA1. En particulier, les grande et petite bases coupent l'axe de l'arbre 60 aux points A3 et A2, respectivement. En particulier, les diamètres des grande et petite bases sont respectivement égaux à DA2 et DA1.

Similairement, dans cet exemple, la surface interne comporte une deuxième portion tronconique dont l'axe est confondu avec celui de l'arbre 60 et dont les grande et petite bases sont respectivement tournées vers la deuxième extrémité 62B de l'arbre 60 et le deuxième plan radial PB1. En particulier, les grande et petite bases coupent l'axe de l'arbre 60 aux points B3 et B2, respectivement. En particulier, les diamètres des grande et petite bases sont respectivement égaux à DB2 et DB1.

Dans cet exemple, la surface interne comporte une portion cylindrique de révolution, qui est agencée entre les première et deuxième portions tronconiques, dans la continuité de ces dernières. L'axe de révolution de cette portion cylindrique est confondu avec celui de l'arbre 60. En particulier, le diamètre de cette portion cylindrique est égal à DA1 qui, dans cet exemple, est lui-même égale à DB1 et réciproquement.

Dans cet exemple, les première et troisième parties de liaison 12A, 12B sont symétriques entre elles par rapport à un plan de symétrie P0 parallèle au premier plan radial PA1, et la section intérieure de l'arbre 60 est symétrique par rapport audit plan de symétrie P0. En particulier, ce plan de symétrie P0 coupe l'axe de l'arbre 60 est un point O. Les points A1 à A3 sont respectivement symétriques avec les points B1 à B3 par rapport à ce point O. De même, les plans PA1 et PA2 sont respectivement symétriques avec les plans PB1 et PB2 par rapport au plan P0.

Dans cet exemple, pour permettre le montage sur l'arbre 60 des autres éléments mis en oeuvre dans l'assemblage, le pourtour extérieur de l'arbre 60 présente quant à lui une légère dissymétrie au niveau de ses extrémités 62A, 62B. En particulier, le pourtour extérieur de l'arbre 60 comporte un épaulement 64A au voisinage de l'une de ses deux extrémités 62A, 62B (au choix, par exemple la première extrémité 62A) et un filetage sur lequel est vissé un écrou 70B au voisinage de l'autre de ses deux extrémités 62A, 62B. Dans cet exemple, les première, deuxième et troisième parties de liaison 12A, 12B, 40 sont disposées les unes à la suite des autres axialement. En particulier, elles sont confinées axialement entre l'épaulement 64A et l'écrou 70B, la première partie de liaison 12A étant confinée axialement entre cet épaulement 64A et le premier plan radial PA1, tandis que la deuxième partie de liaison 40 est confinée axialement entre le premier plan radial PA1 et le deuxième plan radial PB1, et la troisième partie de liaison 12B est confinée axialement entre le deuxième plan radial PB1 et l'écrou 70B.

Dans cet exemple, comme indiqué plus haut, la première bague 20A est interposée radialement entre l'arbre 60 et l'alésage de la première partie de liaison 12A et présente une épaisseur radiale variable E (voir notamment la figure 4).

Dans cet exemple, la première bague 20A présente une symétrie de révolution, en particulier par rapport à un axe de révolution confondu avec l'axe de l'arbre 60, lorsque la première bague 20A est montée sur l'arbre 60.

Dans cet exemple, l'épaisseur radiale E de la première bague 20A augmente en se rapprochant axialement du premier plan radial PA1, au moins dans le premier plan axial Q (en particulier dans tout plan axial, compte tenu du fait que, dans cet exemple, la première bague 20A présente la symétrie de révolution précitée).

Dans cet exemple, l'épaisseur radiale E est constante sur une première portion de la première bague 20A qui s'étend axialement depuis l'extrémité de la première bague 20A destinée à venir en regard de la première extrémité 62A de l'arbre 60.

Dans cet exemple, l'épaisseur radiale E diminue sur la portion restante de la première bague 20A en s'éloignant axialement du premier plan radial PA1 jusqu'à atteindre la valeur constante de la première portion, qui est dans le prolongement de la portion restante précitée.

Dans cet exemple, la première bague 20A présente une surface interne cylindrique de révolution, de sorte que la variation de l'épaisseur radiale E est obtenue par la forme de la surface externe de la première bague 20A, qui est cylindrique de révolution dans la première portion et s'évase en se rapprochant du premier plan radial PA1 dans la portion restante de la première bague 20A. Par exemple, cet évasement peut être obtenu par une surface tronconique.

Dans cet exemple, comme indiqué plus haut, la deuxième bague 20B est interposée radialement entre l'arbre 60 et l'alésage de la troisième partie de liaison 12B et présente une épaisseur radiale variable.

Dans cet exemple, la deuxième bague 20B est analogue à la première bague 20A, ce qui signifie, dans le présent exposé, qu'elle peut comprendre, au choix, une ou plusieurs des caractéristiques détaillées ci-dessus en relation avec la première bague 20A et qui ne sont pas détaillées à nouveau en relation avec la deuxième bague 20B, dans un souci de concision du présent exposé. Lorsque la deuxième bague 20B reprend une ou plusieurs de ces caractéristiques, il suffit d'adapter la terminologie utilisée, par analogie et à la lumière de la figure 3 notamment.

Dans cet exemple, la deuxième bague 20B est identique à la première bague 20A, de sorte que la deuxième bague 20B reprend toutes les caractéristiques de la première bague 20A.

Dans cet exemple, pour renforcer la résistance des alésages aux phénomènes d'endommagement, l'assemblage 1 comprend une première paire de renforts 30A, 32A, qui comprennent, chacun, une portion annulaire interposée radialement entre l'arbre 60 et la première bague 20A, qui du coup se retrouve elle-même interposée radialement entre ces portions annulaires et l'alésage de la première partie de liaison 12A. Dans cet exemple, les deux portions annulaires de cette première paire présentent, chacune, une épaisseur radiale constante. Dans cet exemple, ces deux portions annulaires sont arrangées axialement l'une à côté de l'autre. Dans cet exemple, chacun des deux renforts 30A, 32A de cette première paire comprend en outre une collerette qui s'étend parallèlement au premier plan radial PA1. Dans cet exemple, les collerettes respectives des deux renforts 30A, 32A font saillie radialement au voisinage de deux surfaces opposées axialement de la première partie de liaison 12A. Ces collerettes peuvent ainsi encaisser des efforts axiaux en lieu et place desdites surfaces opposées et/ou améliorer le calage axial de la première partie de liaison 12A.

Dans cet exemple, l'assemblage 1 comprend une deuxième paire de renforts 50A, 50B, qui comprennent, chacun, une portion annulaire interposée radialement entre l'arbre 60 et directement la deuxième partie de liaison 40, et qui sont analogues aux renforts 30A, 32A de la première paire.

Dans cet exemple, l'assemblage 1 comprend une troisième paire de renforts 30B, 32B, qui comprennent, chacun, une portion annulaire interposée radialement entre l'arbre 60 et la deuxième bague 20B, qui du coup se retrouve elle-même interposée radialement entre ces portions annulaires et l'alésage de la deuxième partie de liaison 12B. Ces renforts 30B, 32B sont, dans cet exemple, analogues aux renforts 30A, 32A, voire identiques comme représenté sur les figures.

Dans cet exemple, la chape 10 (en particulier les première et troisième parties de liaison 12A, 12B que la chape 10 incorpore) est réalisée en matériau composite, par exemple en carbone/époxy. Dans cet exemple, la contre-pièce (en particulier la deuxième partie de liaison 40 que la contre-pièce incorpore) est réalisée en métal.

Dans cet exemple, l'arbre 60 est réalisé en métal.

Dans cet exemple, les première et deuxième bagues 20A, 20B sont réalisées en métal.

Dans cet exemple, les renforts 30A, 32A, de même que les renforts 30B, 32B et les renforts 50A, 50B sont réalisés en métal.

On pourrait toutefois prévoir, sans sortir du cadre du présent exposé, une autre composition pour un ou plusieurs, au choix, des éléments précités. Par exemple, on pourrait prévoir que la contre-pièce soit réalisée également en matériau composite et/ou que la chape 10 soit réalisée en métal.

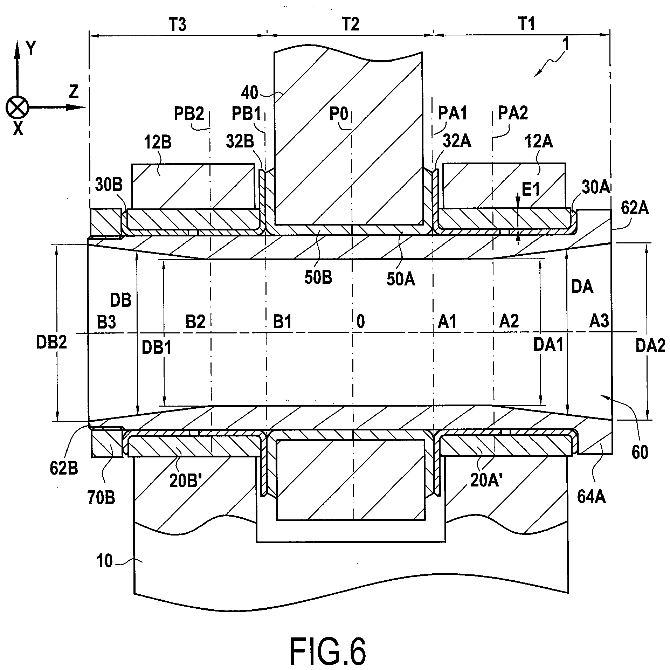

On va à présent décrire, en relation avec les figures 5 et 6, un deuxième exemple de réalisation d'un assemblage 1 de type liaison pivot conforme au présent exposé.

Dans ce deuxième exemple, il est choisi de reprendre l'intégralité des caractéristiques du premier exemple décrit en détail ci-dessus, à l'exception des caractéristiques relatives aux première et deuxième bagues, qui ont été modifiées dans le deuxième exemple. Ainsi, dans un souci de concision du présent exposé, seules ces première et deuxième bagues modifiées 20A', 20B' seront décrites ci-dessous. Tous les autres éléments décrits en relation avec le premier exemple ne seront pas décrits à nouveau en relation avec le deuxième exemple et sont désignés par les mêmes références numériques sur la figure 6.

Dans ce deuxième exemple, l'assemblage 1 comprend une première bague 20A' (bien visible sur la figure 5) interposée radialement entre l'arbre 60 et l'alésage de la première partie de liaison 12A et présentant une épaisseur radiale variable E1, E2.

Dans ce deuxième exemple, l'épaisseur radiale de la première bague 20A' est plus importante dans le premier plan axial Q que dans un deuxième plan axial R orthogonal au premier plan axial Q (dans cet exemple, ce deuxième plan axial R est parallèle aux directions X et Z). En particulier, comme illustré sur la figure 5, l'épaisseur radiale prend une valeur maximale E1 dans le premier plan axial Q et une valeur minimale E2 dans le deuxième plan axial R.

Dans ce deuxième exemple, la première bague 20A' présente, dans un plan de coupe parallèle au premier plan radial PA1, une circonférence interne circulaire et une circonférence externe non circulaire. En particulier, la circonférence externe est elliptique et présente un plus grand axe dans le premier plan axial Q et un plus petit axe dans le deuxième plan axial R.

Dans ce deuxième exemple, l'assemblage 1 comprend une deuxième bague 20B' interposée radialement entre l'arbre 60 et l'alésage de la troisième partie de liaison 12B et présentant une épaisseur radiale variable.

Dans ce deuxième exemple, la deuxième bague 20B' est analogue à la première bague 20A', ce qui signifie, dans le présent exposé, qu'elle peut comprendre, au choix, une ou plusieurs des caractéristiques détaillées ci-dessus en relation avec la première bague 20A' et qui ne sont pas détaillées à nouveau en relation avec la deuxième bague 20B', dans un souci de concision du présent exposé. Lorsque la deuxième bague 20B' reprend une ou plusieurs de ces caractéristiques, il suffit d'adapter la terminologie utilisée, par analogie et à la lumière de la figure 6 notamment.

Dans ce deuxième exemple, la deuxième bague 20B' est identique à la première bague 20A', de sorte que la deuxième bague 20B' reprend toutes les caractéristiques de la première bague 20A'.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation, l'invention étant définie par les revendications jointes.

## Revendications

1. Assemblage (1) de type liaison pivot pour un train d'atterrissage, comprenant un arbre (60) ; et des première et deuxième parties de liaison (12A, 40) dissociées l'une de l'autre et comprenant chacune un alésage recevant l'arbre (60) pour permettre un pivotement relatif des première et deuxième parties de liaison (12A, 40), la première partie de liaison (12A) étant agencée axialement entre une première extrémité (62A) de l'arbre (60) et un plan radial (PA1), tandis que la deuxième partie de liaison (40) est agencée axialement entre ledit plan radial (PA1) et l'autre extrémité (62B) de l'arbre (60), **caractérisé en ce que** l'arbre (60) est creux et comporte une section intérieure qui présente, dans au moins un premier plan axial (Q), sur un premier tronçon (T1) de l'arbre (60) délimité axialement entre la première extrémité (62A) et le plan radial (PA1), une dimension radiale variable (DA) qui diminue en se rapprochant axialement du plan radial (PA1), **en ce que** l'assemblage (1) comprend une bague (20A, 20A') interposée radialement entre l'arbre (60) et l'alésage de la première partie de liaison (12A) et présentant une épaisseur radiale variable (E, E1, E2) et **en ce que** l'épaisseur radiale (E) de la bague (20A) augmente en se rapprochant axialement du plan radial (PA1), au moins dans le premier plan axial (Q).

2. Assemblage (1) de type liaison pivot pour un train d'atterrissage, comprenant un arbre (60) ; et des première et deuxième parties de liaison (12A, 40) dissociées l'une de l'autre et comprenant chacune un alésage recevant l'arbre (60) pour permettre un pivotement relatif des première et deuxième parties de liaison (12A, 40), la première partie de liaison (12A) étant agencée axialement entre une première extrémité (62A) de l'arbre (60) et un plan radial (PA1), tandis que la deuxième partie de liaison (40) est agencée axialement entre ledit plan radial (PA1) et l'autre extrémité (62B) de l'arbre (60), **caractérisé en ce que** l'arbre (60) est creux et comporte une section intérieure qui présente, dans au moins un premier plan axial (Q), sur un premier tronçon (T1) de l'arbre (60) délimité axialement entre la première extrémité (62A) et le plan radial (PA1), une dimension radiale variable (DA) qui diminue en se rapprochant axialement du plan radial (PA1), **en ce que** l'assemblage (1) comprend une bague (20A, 20A') interposée radialement entre l'arbre (60) et l'alésage de la première partie de liaison (12A) et présentant une épaisseur radiale variable (E, E1, E2) et **en ce que** l'épaisseur radiale (E1, E2) de la bague (20A') est plus importante dans le premier plan axial (Q) que dans un deuxième plan axial (R) orthogonal au premier plan axial (Q).

3. Assemblage (1) selon la revendication 1 ou 2, dans lequel la dimension radiale variable (DA) diminue linéairement en se rapprochant axialement du plan radial (PA1).

4. Assemblage (1) selon l'une quelconque des revendications 1 à 3, dans lequel la section intérieure de l'arbre (60) présente, dans ledit au moins un premier plan axial (Q), sur un deuxième tronçon (T2) de l'arbre (60) axialement adjacent au premier tronçon (Tl), une dimension radiale constante (DA1).

5. Assemblage (1) selon l'une quelconque des revendications 1 à 4, dans lequel la section intérieure de l'arbre (60) est circulaire.

6. Assemblage (1) selon la revendication 1, dans lequel la bague (20A) présente une symétrie de révolution.

7. Assemblage (1) selon l'une quelconque des revendications 1 à 6, dans lequel la première partie de liaison (12A) et/ou la deuxième partie de liaison (40) incorpore un matériau composite.

8. Assemblage (1) selon l'une quelconque des revendications 1 à 7, comprenant une chape (10) incorporant la première partie de liaison (12A) et une troisième partie de liaison (12B) espacée axialement de la première partie de liaison (12A) ; et une contre-pièce qui incorpore la deuxième partie de liaison (40) et qui est interposée axialement entre les première et troisième parties de liaison (12A, 12B) de la chape (10).

9. Assemblage (1) selon la revendication 8, dans lequel les première et troisième parties de liaison (12A, 12B) sont symétriques entre elles par rapport à un plan de symétrie (P0) parallèle au plan radial (PA1), et dans lequel la section intérieure de l'arbre (60) est symétrique par rapport audit plan de symétrie (P0).

## Patentansprüche

1. Anordnung (1) vom Typ einer Schwenkverbindung für ein Fahrwerk, umfassend eine Welle (60), und ein erstes und ein zweites Verbindungsteil (12A, 40), die voneinander getrennt sind und jeweils eine die Welle (60) aufnehmende Bohrung umfassen, um ein relatives Schwenken des ersten und zweiten Verbindungsteils (12A, 40) zu erlauben, wobei das erste Verbindungsteil (12A) axial zwischen einem ersten Ende (62A) der Welle (60) und einer radialen Ebene (PA1) angeordnet ist, während das zweite Verbindungsteil (40) axial zwischen der radialen Ebene (PA1) und dem anderen Ende (62B) der Welle (60) angeordnet ist, **dadurch gekennzeichnet, dass** die Welle (60) hohl ist und einen Innenquerschnitt umfasst, der zumindest in einer ersten axialen Ebene (Q), auf einem ersten Teilstück (T1) der Welle (60), das axial zwischen dem ersten Ende (62A) und der radialen Ebene (PA1) begrenzt ist, eine variable radiale Dimension (DA) aufweist, die mit zunehmender axialer Annäherung an die radiale Ebene (PA1) abnimmt, dass die Anordnung (1) einen Ring (20A, 20A') umfasst, der radial zwischen der Welle (60) und der Bohrung des ersten Verbindungsteils (12A) angeordnet ist und eine variable radiale Dicke (E, E1, E2) aufweist, und dass die radiale Dicke (E) des Rings (20A) mit zunehmender axialer Annäherung an die radiale Ebene (PA1) zumindest in der ersten axialen Ebene (Q) zunimmt.

2. Anordnung (1) vom Typ einer Schwenkverbindung für ein Fahrwerk, umfassend eine Welle (60), und ein erstes und ein zweites Verbindungsteil (12A, 40), die voneinander getrennt sind und jeweils eine die Welle (60) aufnehmende Bohrung umfassen, um ein relatives Schwenken des ersten und zweiten Verbindungsteils (12A, 40) zu erlauben, wobei das erste Verbindungsteil (12A) axial zwischen einem ersten Ende (62A) der Welle (60) und einer radialen Ebene (PA1) angeordnet ist, während das zweite Verbindungsteil (40) axial zwischen der radialen Ebene (PA1) und dem anderen Ende (62B) der Welle (60) angeordnet ist, **dadurch gekennzeichnet, dass** die Welle (60) hohl ist und einen Innenquerschnitt umfasst, der zumindest in einer ersten axialen Ebene (Q), auf einem ersten Teilstück (T1) der Welle (60), das axial zwischen dem ersten Ende (62A) und der radialen Ebene (PA1) begrenzt ist, eine variable radiale Dimension (DA) aufweist, die mit zunehmender axialer Annäherung an die radiale Ebene (PA1) abnimmt, dass die Anordnung (1) einen Ring (20A, 20A') umfasst, der radial zwischen der Welle (60) und der Bohrung des ersten Verbindungsteils (12A) angeordnet ist und eine variable radiale Dicke (E, E1, E2) aufweist, und dass die radiale Dicke (E1, E2) des Rings (20A') in der ersten axialen Ebene (Q) größer ist als in einer zweiten axialen Ebene (R), die im rechten Winkel zu der ersten axialen Ebene (Q) steht.

3. Anordnung (1) nach Anspruch 1 oder 2, wobei die variable radiale Dimension (DA) mit zunehmender axialer Annäherung an die radiale Ebene (PA1) abnimmt.

4. Anordnung (1) nach einem der Ansprüche 1 bis 3, wobei der Innenquerschnitt der Welle (60) in der zumindest einen ersten axialen Ebene (Q), auf einem zweiten Teilstück (T2) der Welle (60) axial benachbart zu dem ersten Teilstück (T1), eine konstante radiale Dimension (DA1) aufweist.

5. Anordnung (1) nach einem der Ansprüche 1 bis 4, wobei der Innenquerschnitt der Welle (60) kreisförmig ist.

6. Anordnung (1) nach Anspruch 1, wobei der Ring (20A) rotationssymmetrisch ist.

7. Anordnung (1) nach einem der Ansprüche 1 bis 6, wobei das erste Verbindungsteil (12A) und/oder das zweite Verbindungsteil (40) ein Verbundmaterial einbeziehen.

8. Anordnung (1) nach einem der Ansprüche 1 bis 7, umfassend einen Gabelkopf (10), der das erste Verbindungsteil (12A) und ein drittes Verbindungsteil (12B) einbezieht, der axial von dem ersten Verbindungsteil (12A) beabstandet ist, und ein Gegenstück, das das zweite Verbindungsteil (40) einbezieht und das axial zwischen dem ersten und dritten Verbindungsteil (12A, 12B) des Gabelkopfs (10) angeordnet ist.

9. Anordnung (1) nach Anspruch 8, wobei das erste und das dritte Verbindungsteil (12A, 12B) zueinander in Bezug auf eine Symmetrieebene (P0), die parallel zu der radialen Ebene (PA1) ist, symmetrisch sind, und wobei der Innenquerschnitt der Welle (60) in Bezug auf die Symmetrieebene (P0) symmetrisch ist.

## Claims

1. A pivot connection type assembly (1) comprising a shaft (60) and first and second connection parts (12A, 40) that are dissociated from each other, each having a bore receiving the shaft (60) so as to enable the first and second connection parts (12A, 40) to pivot relative to each other, the first connection part (12A) being arranged axially between a first end (62A) of the shaft (60) and a radial plane (PA1), while the second connection part (40) is arranged axially between said radial plane (PA1) and the other end (62B) of the shaft (60), the assembly being **characterized in that** the shaft (60) is hollow and includes an inside section that presents a radial dimension at least in a first axial plane (Q) and over a first segment (T1) of the shaft (60) extending axially between the first end (62A) and the radial plane (PA1), which radial dimension (DA) varies, decreasing on axially approaching the radial plane (PA1), and **in that** the assembly (1) includes a ring (20A, 20A') interposed radially between the shaft (60) and the bore of the first connection part (12A), and presenting radial thickness (E, E1, E2) that varies,
wherein the radial thickness (E) of the ring (20A) increases on axially approaching the radial plane (PA1), at least in the first axial plane (Q).

2. A pivot connection type assembly (1) comprising a shaft (60) and first and second connection parts (12A, 40) that are dissociated from each other, each having a bore receiving the shaft (60) so as to enable the first and second connection parts (12A, 40) to pivot relative to each other, the first connection part (12A) being arranged axially between a first end (62A) of the shaft (60) and a radial plane (PA1), while the second connection part (40) is arranged axially between said radial plane (PA1) and the other end (62B) of the shaft (60), the assembly being **characterized in that** the shaft (60) is hollow and includes an inside section that presents a radial dimension at least in a first axial plane (Q) and over a first segment (T1) of the shaft (60) extending axially between the first end (62A) and the radial plane (PA1), which radial dimension (DA) varies, decreasing on axially approaching the radial plane (PA1), and **in that** the assembly (1) includes a ring (20A, 20A') interposed radially between the shaft (60) and the bore of the first connection part (12A), and presenting radial thickness (E, E1, E2) that varies,
wherein the radial thickness (E1, E2) of the ring (20A') is greater in the first axial plane (Q) than in a second axial plane (R) orthogonal to the first axial plane (Q)

3. An assembly (1) according to claim 1 or 2, wherein the radial dimension (DA) that varies decreases linearly on axially approaching the radial plane (PA1).

4. An assembly (1) according to any one of claims 1 to 3, wherein the inside section of the shaft (60) presents a radial dimension (DA1) that is constant in said at least one first axial plane (Q) and over a second segment (T2) of the shaft (60) that is axially adjacent to the first segment (T1).

5. An assembly (1) according to any one of claims 1 to 4, wherein the inside section of the shaft (60) is circular.

6. An assembly (1) according to claim 1, wherein the ring (20A) presents symmetry of revolution.

7. An assembly (1) according to any one of claims 1 to 6, wherein the first connection part (12A) and/or the second connection part (40) incorporate(s) a composite material.

8. An assembly (1) according to any one of claims 1 to 7, including a clevis (10) incorporating the first connection part (12A) and a third connection part (12B) spaced apart axially from the first connection part (12A), and a complementary part incorporating the second connection part (40) and interposed axially between the first and third connection parts (12A, 12B) of the clevis (10).

9. An assembly (1) according to claim 8, wherein the first and third connection parts (12A, 12B) are symmetrical to each other about a plane of symmetry (P0) parallel to the radial plane (PA1), and wherein the inside section of the shaft (60) is symmetrical relative to said plane of symmetry (P0).
